# EUROPEAN PATENT APPLICATION

(11) **EP 4 640 286 A1**
(43) Date of publication of application: **29.10.2025**
(21) Application number: 23918135.7
(22) Date of filing: 10.03.2023
(51) Int. Cl.: A62C 3/16, H01M 10/48, H01M 10/613, H01M 10/6569

(54) **FIRE-FIGHTING SYSTEM AND ENERGY STORAGE SYSTEM**

(30) Priority: 26.01.2023 WO PCT/CN2023/073480
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: TU, Minjie, Shanghai 201100 (CN); SUN, Lijun, Shanghai 201100 (CN); LU, Yanhua, Shanghai 201100 (CN)
(74) Representative: Gong, Jinping
(86) International application number: PCT/CN2023/080863
(87) International publication number: WO 2024/156130

(57) **Abstract**

This application discloses a firefighting system and an energy storage system. The firefighting system includes: a sealed compartment, a circulation system, and a supply system. The sealed compartment is configured to accommodate at least one energy storage unit; the circulation system includes a circulation pipeline and a gas driving assembly, where two ends of the circulation pipeline are in communication with the sealed compartment to form a gas circulation loop; the gas driving assembly is disposed in the gas circulation loop; and a flame-retardant gas supply system is connected to the circulation system. The above solution can reduce the risk of fire or explosion inside the sealed compartment.

## Description

### CROSS-REFERENCE TO RELATED APPLICATIONS

This application claims priority to International Patent Application No. PCT/CN2023/073480 with the China Patent Office, filed on January 26, 2023 and entitled "FIREFIGHTING SYSTEM AND ENERGY STORAGE SYSTEM", the entirety of which is incorporated herein by reference.

### TECHNICAL FIELD

This application relates to the field of energy storage, and in particular, to a firefighting system and an energy storage system.

### BACKGROUND

Energy storage refers to a process of storing energy through a medium or a device and releasing it when needed. With the increasing occurrence of battery explosion incidents, existing battery firefighting technologies still face numerous issues and deficiencies during practical application of energy storage power stations, mainly manifested in: fire extinguishing agents are used to extinguish fire only after a fire or explosion occurs. However, existing fire extinguishing agents usually have difficulty directly implementing direct fire suppression, and re-ignition is likely to occur after extinguishment.

### SUMMARY

In view of the above problems, this application provides at least a firefighting system and an energy storage system, to reduce the risk of fire or explosion inside a compartment.

This application provides a firefighting system including: a sealed compartment, a circulation system, and a flame-retardant gas supply system. The sealed compartment is configured to accommodate at least one energy storage unit; the circulation system includes a circulation pipeline and a gas driving assembly, where two ends of the circulation pipeline are in communication with the sealed compartment to form a gas circulation loop; the gas driving assembly is disposed in the gas circulation loop; and the flame-retardant gas supply system is connected to the circulation system.

In the above solution, the circulation system cooperates with the sealed compartment to form a gas circulation loop, and the flame-retardant gas supply system supplies flame-retardant gas to the gas circulation loop, so that when the energy storage unit is in a normal operating state, the gas driving assembly drives the flame-retardant gas to circulate in the gas circulation loop, reducing an oxygen concentration inside the sealed compartment, thereby making it less likely for fire or explosion events to occur inside the sealed compartment.

According to some embodiments, the firefighting system includes an exhaust pipeline and a first valve, where one end of the exhaust pipeline is in communication with the sealed compartment, and the first valve is disposed in the circulation pipeline and/or the exhaust pipeline.

In the above solution, through provision of the exhaust pipeline and the first valve, in a case that the first valve is disposed in the circulation pipeline, the gas circulation loop can be disconnected when the energy storage unit is in a thermal runaway state, reducing the possibility of circulating thermal runaway gas back into the compartment. In a case that the first valve is disposed in the exhaust pipeline, when the energy storage unit is in a thermal runaway state, the gas driving assembly can drive thermal runaway gas inside the sealed compartment to be discharged through the first valve via the exhaust pipeline, achieving a smoke exhaust effect.

According to some embodiments, the circulation system further includes a controller and a gas sensor disposed in the circulation pipeline, where the controller is connected to the gas sensor and the first valve.

In the above solution, the gas sensor is disposed in the circulation pipeline rather than inside the sealed compartment, reducing electrical interference to the gas sensor, resulting in more accurate detection results.

According to some embodiments, the first valve is a multi-way valve, where two ends of the first valve are connected to the circulation pipeline to form the gas circulation loop, and another end is connected to the exhaust pipeline.

In the above solution, the first valve is disposed in the circulation pipeline, and the first valve is connected to the exhaust pipeline, so that when the energy storage unit is in a thermal runaway state, thermal runaway gas entering the gas circulation loop can be discharged to a designated area through the exhaust pipeline, achieving a smoke exhaust effect. This also facilitates disconnection of the circulation pipeline from the exhaust pipeline when the energy storage unit is in a normal operating state, preventing the flame-retardant gas in the gas circulation loop from being discharged through the exhaust pipeline.

According to some embodiments, the firefighting system includes a second valve, where the first valve is disposed in the circulation pipeline, one end of the second valve is connected to the compartment, and another end of the second valve is connected to the exhaust pipeline.

In the above solution, two valves are used to respectively control the circulation pipeline and the exhaust pipeline, preventing the loss of control over both the circulation pipeline and the exhaust pipeline after one valve fails.

According to some embodiments, the circulation system further includes a controller and a gas sensor disposed in the circulation pipeline, where the gas sensor detects for content of thermal runaway gas in the circulation pipeline, and the controller determines, based on the content of the thermal runaway gas, whether the energy storage unit is in a normal operating state or a thermal runaway state, where when the energy storage unit is in the normal operating state, the circulation pipeline and the sealed compartment are in a connected state, and/or when the energy storage unit is in the thermal runaway state, the exhaust pipeline and the sealed compartment are in a connected state.

In the above solution, according to some embodiments, the circulation pipeline includes a first pipeline and a second pipeline disposed at two ends of the first valve, where one end of the first pipeline and one end of the second pipeline are connected through the first valve, another end of the first pipeline is connected to the sealed compartment, and another end of the second pipeline is connected to the sealed compartment.

In the above solution, a connection between the first pipeline and the second pipeline is disconnected when the energy storage unit is in a thermal runaway state, preventing the flame-retardant gas in the gas circulation loop from entering the sealed compartment through the second pipeline.

According to some embodiments, the sealed compartment is provided in plurality, where one end of each sealed compartment is connected to the first pipeline, and another end of each sealed compartment is connected to the second pipeline.

In the above solution, a plurality of sealed compartments are provided, with each sealed compartment located in the gas circulation loop, facilitating management of the plurality of sealed compartments.

According to some embodiments, all the sealed compartments are arranged in a single layer or at least some of the sealed compartments are stacked.

In the above solution, voltage may differ in single-layer arrangement and stacked arrangement, meaning that the firefighting system provided in this solution can be applied to high-voltage direct-connection scenarios or other non-high-voltage direct-connection scenarios.

According to some embodiments, the gas driving assembly includes a fan, where the fan is disposed in the first pipeline.

In the above solution, the fan is disposed in the first pipeline, capable of driving the gas to continue flowing along the gas circulation loop after passing through the first valve, and/or driving the gas inside the sealed compartment to be discharged to a designated area along the exhaust pipeline.

According to some embodiments, the gas driving assembly includes a smoke exhaust fan, where the smoke exhaust fan is located in the exhaust pipeline.

In the above solution, the smoke exhaust fan is disposed, improving the efficiency of gas discharge from the exhaust pipeline.

According to some embodiments, a combustible medium filtration assembly is disposed in the circulation pipeline.

In the above solution, the combustible medium filtration assembly is disposed in the circulation pipeline, capable of filtering combustible media in the pipeline, further preventing the combustible media from flowing back into the cavity.

According to some embodiments, the flame-retardant gas supply system includes a flame-retardant gas supply source and a third valve, where the third valve connects the gas circulation loop and the flame-retardant gas supply source.

In the above solution, the flame-retardant gas supply source and the third valve are disposed in the flame-retardant gas supply system, allowing the flame-retardant gas supply source to be controlled through the third valve to supply flame-retardant gas to the gas circulation loop or to stop supplying flame-retardant gas to the gas circulation loop.

According to some embodiments, the third valve controls the flame-retardant gas supply source to supply flame-retardant gas to the gas circulation loop when a pressure in the gas circulation loop is less than or equal to a preset pressure threshold; or the third valve controls the flame-retardant gas supply source to supply flame-retardant gas to the gas circulation loop at preset intervals so that a pressure in the gas circulation loop is greater than a preset pressure threshold; or the third valve controls the flame-retardant gas supply source to supply flame-retardant gas to the gas circulation loop when an oxygen content in the gas circulation loop is greater than or equal to a preset oxygen content.

In the above solution, the third valve and the flame-retardant gas supply source are disposed, so that the third valve can open when the pressure in the gas circulation loop is less than or equal to the preset pressure threshold, facilitating the flame-retardant gas supply source to supply flame-retardant gas to the gas circulation loop; or the flame-retardant gas supply source is controlled at intervals to supply flame-retardant gas, facilitating gas replenishment in the gas circulation loop; or flame-retardant gas is supplemented to the gas circulation loop when the oxygen content rises, facilitating dilution of oxygen in the gas circulation loop.

According to some embodiments, the preset pressure threshold is higher than an ambient pressure outside the gas circulation loop.

In the above solution, the gas circulation loop maintains a positive pressure relative to the ambient pressure outside the circulation loop, preventing gas outside the gas circulation loop from flowing into the gas circulation loop due to pressure difference, thereby maintaining a low oxygen concentration in the gas circulation loop.

According to some embodiments, an oxygen content inside the sealed compartment is less than or equal to a preset ignition threshold.

In the above solution, the oxygen content inside the sealed compartment is less than or equal to the preset ignition threshold, making it difficult for a combustion or explosion event to occur even after a thermal runaway event in the energy storage unit.

According to some embodiments, the third valve is a pressure difference control valve.

In the above solution, a pressure difference control valve is used to physically measure pressure, with no need for sensor detection and signal transmission processes, resulting in a faster response speed.

According to some embodiments, the third valve is an electrically controlled valve, and the circulation system includes a pressure detection component disposed in the gas circulation loop, where the pressure detection component and the third valve are connected to the controller.

In the above solution, the pressure detection component and the controller are disposed, so that the controller controls, based on the pressure in the gas circulation loop, the third valve to open or close, facilitating the third valve to deliver the flame-retardant gas provided by the flame-retardant gas supply source to the gas circulation loop or stop delivering it to the gas circulation loop.

According to some embodiments, the flame-retardant gas supply system further includes a gas generator for producing flame-retardant gas, where the gas generator is connected to the flame-retardant gas supply source.

In the above solution, the gas generator is disposed, allowing for timely replenishment to the flame-retardant gas supply source when the amount of flame-retardant gas in the flame-retardant gas supply source decreases.

According to some embodiments, a buffer component for storing flame-retardant gas is disposed in the circulation pipeline, where the buffer component is connected to the third valve.

In the above solution, the buffer component is disposed to temporarily store the flame-retardant gas in the pipeline.

According to some embodiments, the firefighting system includes a cooling system, where the cooling system includes a fire extinguishing agent supply source and a fourth valve, and the fourth valve connects the sealed compartment and the fire extinguishing agent supply source and is connected to the controller.

In the above solution, the cooling system is disposed, to further cool the sealed compartment in case of a fire in the sealed compartment, reducing heat transfer.

According to some embodiments, the circulation loop runs through a relatively independent equipment room and a valve hall, where the valve hall accommodates the sealed compartment, and the equipment room accommodates target components of the firefighting system, the target components including the controller and the gas sensor of the circulation system and/or the flame-retardant gas supply source of the flame-retardant gas supply system.

In the above solution, the target components such as the controller and the gas sensor, and/or the flame-retardant gas supply source of the flame-retardant gas supply system are placed in the equipment room, reducing interference from electrical devices in the valve hall to the target components and facilitating maintenance of the flame-retardant gas supply system.

According to some embodiments, the firefighting system includes an exhaust pipeline, where one end of the exhaust pipeline is in communication with the sealed compartment, and another end is in communication with an outside of the valve hall.

In the above solution, gas is discharged to the outside of the valve hall through the exhaust pipeline, reducing the risk of fire or explosion in the valve hall.

This application provides an energy storage system including the foregoing firefighting system and at least one energy storage unit.

In the above solution, the circulation system cooperates with the sealed compartment to form a gas circulation loop, and the flame-retardant gas supply system supplies flame-retardant gas to the gas circulation loop, so that when the energy storage unit is in a normal operating state, the gas driving assembly drives the flame-retardant gas to circulate in the gas circulation loop, reducing an oxygen concentration inside the sealed compartment, thereby making it less likely for fire or explosion events to occur inside the sealed compartment.

It should be understood that the above general description and the detailed description below are only exemplary and explanatory and do not limit this application.

### BRIEF DESCRIPTION OF DRAWINGS

The drawings herein are incorporated into the specification and form a part of this specification, illustrating embodiments consistent with this application and used together with the specification to explain the technical solutions of this application.
FIG. 1 is a first schematic structural diagram of an embodiment of an energy storage system according to one or more embodiments;
FIG. 2 is a second schematic structural diagram of an embodiment of an energy storage system according to one or more embodiments;
FIG. 3 is a third schematic structural diagram of an embodiment of an energy storage system according to one or more embodiments;
FIG. 4 is a first schematic diagram of connection between a circulation system and a plurality of sealed compartments in a firefighting system according to one or more embodiments; and
FIG. 5 is a second schematic diagram of connection between a circulation system and a plurality of sealed compartments in a firefighting system according to one or more embodiments.

Reference signs:
1. energy storage system; 10. firefighting system; 20. energy storage unit; 11. sealed compartment; 12. circulation system; 13. flame-retardant gas supply system; 131. third valve; 132. flame-retardant gas supply source; 133. gas generator; 121. first valve; 122. circulation pipeline; 123. exhaust pipeline; 124. controller; 125. gas sensor; 1221. first pipeline; 1222. second pipeline; 126. combustible medium filtration assembly; 127. gas driving assembly; 1271. fan; 128. buffer component; 1272. smoke exhaust fan; 14. cooling system; 141. fire extinguishing agent supply source; 142. fourth valve; a. equipment room; b. valve hall; 1231. second valve; and 129. pressure detection component.

### DESCRIPTION OF EMBODIMENTS

The embodiments of this application will be described in detail below in conjunction with the accompanying drawings.

In the following description, for the purpose of explanation rather than limitation, specific details such as specific system structures, interfaces, and techniques are set forth to provide a thorough understanding of this application.

The term "and/or" in this document is merely an associative relationship describing associated objects, indicating that three relationships may exist, for example, A and/or B may indicate: A exists alone, A and B exist simultaneously, and B exists alone. In addition, the character "/" in this specification generally indicates an "or" relationship between contextually associated objects. Furthermore, "multiple" in this document means two or more. Additionally, the term "at least one" in this document means any one of multiple or any combination of at least two of multiple, for example, including at least one of A, B, and C may mean including any one or more elements selected from the set consisting of A, B, and C.

The inventor of this solution has found that currently, during the practical application of energy storage power stations, fire extinguishing agents are used to extinguish fires only after a fire or explosion occurs, but existing fire extinguishing agents usually have difficulty achieving direct fire suppression, and re-ignition is likely to occur after extinguishment. To address this issue, the inventor has found that it is preferable to directly eliminate combustion-supporting substances for the three elements of combustion, so as to effectively reduce the risk of fire caused by the mixing of battery thermal runaway gas with air. The specific solution is detailed in the following embodiments.

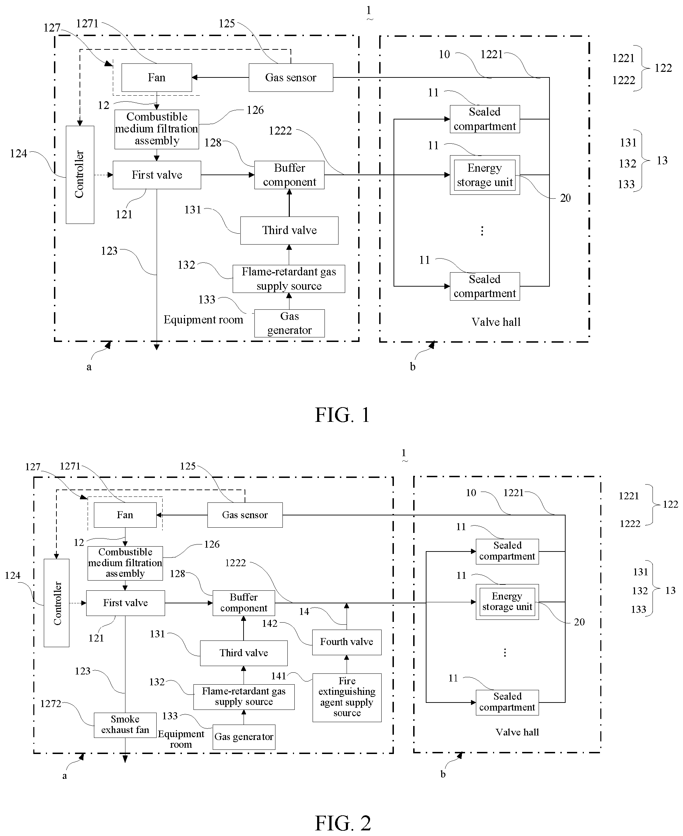

Referring to FIG. 1, an energy storage system 1 provided in this embodiment includes a firefighting system 10 and at least one energy storage unit 20.

The energy storage system 1 may be a high-voltage direct-connection energy storage system 1 or a traditional non-high-voltage direct-connection energy storage system 1. The structure of the firefighting system 10 is detailed in the embodiments of the firefighting system 10 described below and is not repeated herein. The energy storage unit 20 may be an apparatus having energy storage functionality, for example, the energy storage unit 20 may be an electrical box of one or more batteries. The high-voltage direct-connection energy storage system integrates a VSC (voltage source converter, voltage source converter) valve with a direct-current energy storage valve, offering advantages such as high modularity, low system network loss, good economic benefit, and high operational reliability. Compared to traditional energy storage technologies, the new high-voltage direct-current direct-connection energy storage system has a higher voltage level and larger capacity, and provides stronger grid regulation capabilities and grid support functions. Lithium-ion batteries, due to their high energy density, long cycle life, fast response, and low self-discharge, are widely used in electrochemical energy storage systems. However, lithium-ion batteries are highly prone to thermal runaway under conditions such as short circuit, overcharging, over-discharging, mechanical abuse, and thermal abuse. Thermal runaway in lithium-ion batteries can produce combustible or toxic gases such as H2, hydrocarbons, and CO. Due to the high voltage level of the high-voltage energy storage valve, partial discharges are likely to occur, generating sparks. If the battery thermal runaway gas reaches a specific concentration in the valve hall, large-scale fires or even explosion accidents may take place. Therefore, applying this solution to a high-voltage direct-connection energy storage system can effectively reduce the probability of explosion accidents.

In the above solution, the circulation system 12 cooperates with the sealed compartment 11 to form a gas circulation loop, and the flame-retardant gas supply system 13 supplies flame-retardant gas to the gas circulation loop, so that when the energy storage unit 20 is in a normal operating state, the flame-retardant gas circulates in the gas circulation loop, reducing the oxygen concentration inside the sealed compartment 11, thereby making it less likely for fire or explosion events to occur inside the sealed compartment 11.

As shown in FIG. 1 and FIG. 2, this application provides a firefighting system 10 including: a sealed compartment 11, a circulation system 12, and a flame-retardant gas supply system 13. The sealed compartment 11 is configured to accommodate at least one energy storage unit 20. The circulation system 12 includes a circulation pipeline 122 and a gas driving assembly 127. Two ends of the circulation pipeline 122 are in communication with the sealed compartment 11 to form a gas circulation loop, and the gas driving assembly 127 is disposed in the gas circulation loop. The flame-retardant gas supply system 13 is connected to the circulation system 12.

The sealed compartment 11 is configured to accommodate the energy storage unit 20. A better sealing performance of the sealed compartment 11 makes it less likely for gas outside the sealed compartment 11 to flow into the gas circulation loop from the sealed compartment 11. The sealed compartment 11 may specifically be a compartment with good sealing performance. The sealed compartment 11 may be an electrical cabinet or another apparatus capable of accommodating the energy storage unit 20. For example, the sealed compartment 11 may be a box for temporarily holding the energy storage unit, or the like. A specific form of the sealed compartment 11 is not limited herein. At least one may mean one or more, such as two or three. The energy storage unit 20 may be an apparatus having energy storage functionality. For example, the energy storage unit 20 may be an electrical box of one or more batteries. That the circulation pipeline 122 cooperates with the sealed compartment 11 to form a gas circulation loop may specifically be the sealed compartment 11 serving as a part of the gas circulation loop. The flame-retardant gas supply system 13 is connected to the circulation system 12 and supplies flame-retardant gas to the gas circulation loop. The flame-retardant gas may be any inert gas or other gas that is not conducive to combustion events. This embodiment takes nitrogen as an example of the flame-retardant gas. The flame-retardant gas can circulate in the circulation loop, meaning that the flame-retardant gas, after supplied to the circulation loop by the flame-retardant gas supply system 13, can circulate within the circulation loop. The gas driving assembly 127 is disposed in the gas circulation loop and drives the gas flow in the gas circulation loop. That the gas driving assembly 127 is disposed in the gas circulation loop may specifically mean being disposed in the circulation system 12 or in the sealed compartment 11. For example, the gas driving assembly 127 is disposed in the circulation pipeline 122. In some application scenarios, when the energy storage unit 20 is in a normal operating state, the gas driving assembly 127 drives the gas flow in the gas circulation loop.

In the above solution, the circulation system 12 cooperates with the sealed compartment 11 to form a gas circulation loop, and the flame-retardant gas supply system 13 supplies flame-retardant gas to the gas circulation loop, so that when the energy storage unit 20 is in a normal operating state, the flame-retardant gas circulates in the gas circulation loop, reducing the oxygen concentration inside the sealed compartment 11, thereby making it less likely for fire or explosion events to occur inside the sealed compartment 11. Additionally, when the energy storage unit 20 is in a thermal runaway state, the thermal runaway gas in the sealed compartment 11 enters the gas circulation loop, and then the circulation system 12 can discharge the gas in the gas circulation loop to a designated area, achieving a smoke exhaust effect.

According to some embodiments, the firefighting system includes an exhaust pipeline 123 and a first valve 121. One end of the exhaust pipeline 123 is in communication with the sealed compartment 11, and the first valve 121 is disposed in the circulation pipeline 122 and/or the exhaust pipeline 123.

Another end of the exhaust pipeline 123 extends to a designated area outside the sealed compartment 11. In some application scenarios, the designated area may be an area outside the valve hall, where the valve hall is a space where the sealed compartment 11 is placed. For example, another end of the exhaust pipeline 123 is in communication with the outside of the valve hall. The first valve 121, when disposed in a pipeline, can control the connection or disconnection of the pipeline and can also control the flow rate passing through the first valve 121. That the first valve 121 is disposed in the circulation pipeline 122 and/or the exhaust pipeline 123 may specifically mean being disposed in the circulation pipeline 122, in the exhaust pipeline 123, or in both the circulation pipeline 122 and the exhaust pipeline 123. The gas driving assembly 127 is disposed in the gas circulation loop and drives the gas flow in the gas circulation loop and/or drives the gas inside the sealed compartment 11 to be discharged to a designated area along the exhaust pipeline 123. In some application scenarios, when the energy storage unit 20 is in a thermal runaway state, the gas driving assembly 127 drives the gas inside the sealed compartment 11 to be discharged to a designated area along the exhaust pipeline 123. In some application scenarios, the gas driving assembly 127 drives at least part of the gas flow in the gas circulation loop and drives at least part of the gas inside the sealed compartment 11 to be discharged to a designated area along the exhaust pipeline 123. In some application scenarios, if the energy storage system is a high-voltage direct-connection energy storage system, due to the high voltage level in the valve hall of the high-voltage energy storage system, partial discharges are likely to occur, generating sparks. If the battery thermal runaway gas reaches a specific concentration in the valve hall, large-scale fires or even explosion accidents may take place. Therefore, the designated area can be set outside the valve hall to reduce the risk of fire or explosion in the valve hall.

In the above solution, the exhaust pipeline 123 and the first valve 121 are disposed. In a case that the first valve 121 is disposed in the circulation pipeline 122, when the energy storage unit 20 is in a thermal runaway state, the gas circulation loop 122 can be disconnected, reducing the possibility of circulating thermal runaway gas back into the compartment 11. In a case that the first valve 121 is disposed in the exhaust pipeline 123, when the energy storage unit is in a thermal runaway state, the gas driving assembly 127 can drive the thermal runaway gas inside the sealed compartment 11 to be discharged to a designated area through the first valve 121 via the exhaust pipeline 123, achieving a smoke exhaust effect.

According to some embodiments, the circulation system 12 further includes a controller 124 and a gas sensor 125 disposed in the circulation pipeline, where the controller 124 is connected to the gas sensor 125 and the first valve 121.

The gas sensor 125 detects a content of thermal runaway gas in the circulation pipeline 122, and the controller 124 controls the first valve 121 based on the content of the thermal runaway gas. The gas sensor 125 detects the content of thermal runaway gas in the circulation pipeline 122, and the controller 124 determines, based on the content of the thermal runaway gas, whether the energy storage unit 20 is in a normal operating state or a thermal runaway state. When the energy storage unit 20 is in the normal operating state, the circulation pipeline 122 and the sealed compartment 11 are in a connected state. When the energy storage unit 20 is in the thermal runaway state, the exhaust pipeline 123 and the sealed compartment 11 are in a connected state. For example, the gas sensor 125 may be a fire detector. The gas sensor 125 is disposed in the circulation pipeline 122, so that it can detect the content of thermal runaway gas in the circulation pipeline 122, and the controller 124 can determine, based on a detection result of the gas sensor 125, whether the energy storage unit 20 is in a normal operating state or a thermal runaway state. The controller 124 may include a control chip, which may be disposed in a separate device, for example, the control chip may be disposed in a computer device. Alternatively, the controller 124 may include a plurality of discrete control units (not shown in the figures). A specific form of the controller 124 is not limited herein. The gas sensor 125 may be provided in plurality, and the controller 124 determines the state of the energy storage unit 20 based on detection results of the plurality of gas sensors 125.

In the above solution, the gas sensor 125 is disposed in the circulation pipeline 122 rather than inside the sealed compartment 11, reducing electrical interference to the gas sensor 125, allowing for more accurate detection results.

As shown in FIG. 2, according to some embodiments, the first valve 121 is a multi-way valve. Two ends of the first valve 121 are connected to the circulation pipeline 122 to form, and another end is connected to the exhaust pipeline 123.

The first valve 121 may be a three-way valve, a five-way valve, or a multi-way valve with other numbers of channels. Optionally, the first valve 121 controls a connection between the circulation pipeline 122 and the exhaust pipeline 123 to be disconnected when the energy storage unit 20 is in a normal operating state, and controls a connection between the circulation pipeline 122 and the exhaust pipeline 123 to be established when the energy storage unit 20 is in a thermal runaway state. The normal operating state refers to a state of the energy storage unit 20 other than the thermal runaway state. Thermal runaway of the energy storage unit 20 refers to a cumulative enhancement effect of current and temperature of the energy storage unit 20 during constant voltage charging, leading to progressive damage.

In the above solution, the first valve 121 is connected to both the circulation pipeline 122 and the exhaust pipeline 123, so that when the energy storage unit 20 is in a thermal runaway state, the thermal runaway gas can enter the gas circulation loop and then the gas is discharged to a designated area through the exhaust pipeline 123, achieving a smoke exhaust effect. Additionally, when the energy storage unit 20 is in a normal operating state, the connection between the circulation pipeline 122 and the exhaust pipeline 123 can be disconnected, preventing the flame-retardant gas in the gas circulation loop from being discharged through the exhaust pipeline 123.

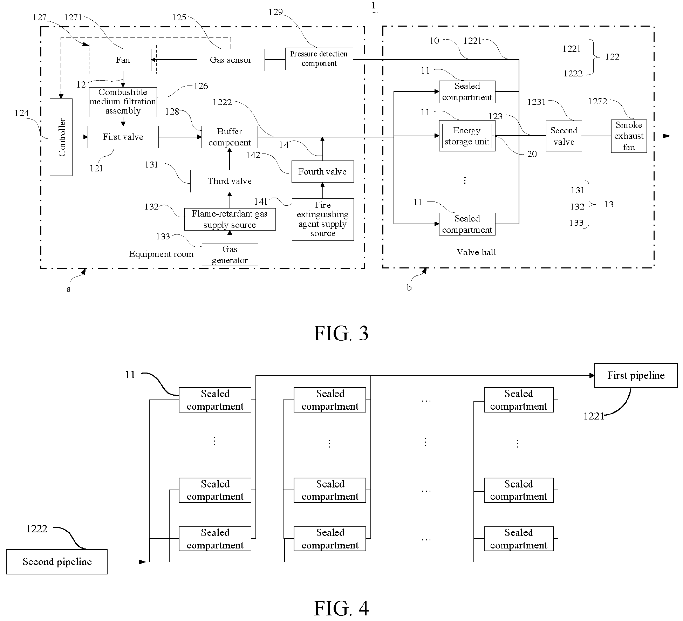

As shown in FIG. 3, according to some embodiments, the firefighting system 10 further includes a second valve 1231. The first valve 121 is disposed in the circulation pipeline 122. One end of the second valve 1231 is connected to the compartment 11, and another end of the second valve 1231 is connected to the exhaust pipeline 123.

That is, the exhaust pipeline 123 is connected to the sealed compartment 11 through the second valve 1231. Optionally, the first valve and the second valve 1231 are independent of each other and do not affect each other. The two valves may be controlled by a same control module or by different control modules separately. In some application scenarios, the valve disposed in the circulation pipeline 122 controls the connection between the circulation pipeline 122 and the exhaust pipeline 123 to be interrupted when the energy storage unit 20 is in a normal operating state. The valve connected to the exhaust pipeline 123 controls the connection between the circulation pipeline 122 and the exhaust pipeline 123 to be established when the energy storage unit 20 is in a thermal runaway state.

In the above solution, two valves are used to respectively control the circulation pipeline 122 and the exhaust pipeline 123, preventing loss of control over both the circulation pipeline 122 and the exhaust pipeline 123 in case that one valve fails.

According to some embodiments, the circulation pipeline 122 includes a first pipeline 1221 and a second pipeline 1222 disposed at two ends of the first valve 121. One end of the first pipeline 1221 and one end of the second pipeline 1222 are connected through the first valve 121, the other end of the first pipeline 1221 is connected to the sealed compartment 11, and the other end of the second pipeline 1222 is connected to the sealed compartment 11.

That is, one end of the first pipeline 1221 is connected to the first valve 121, and the other end is connected to the sealed compartment 11; one end of the second pipeline 1222 is connected to the first valve 121, and the other end is connected to the sealed compartment 11. The first valve 121 controls the connection between the second pipeline 1222 and the first pipeline 1221 to be disconnected when the energy storage unit 20 is in a thermal runaway state. That the first valve 121 controls the connection between the exhaust pipeline 123 and the circulation pipeline 122 to be disconnected or established may be disconnecting the connection between the exhaust pipeline 123 and the first pipeline 1221 or establishing the connection with the first pipeline 1221. The first valve 121 is disposed between the first pipeline 1221 and the second pipeline 1222, so as to disconnect the connection between the first pipeline 1221 and the second pipeline 1222 when the energy storage unit 20 is in a thermal runaway state, and establish the connection between the first pipeline 1221 and the second pipeline 1222 when the energy storage unit 20 is in a normal operating state. When the energy storage unit 20 has been in a thermal runaway state for a period of time, if the gas sensor 125 detects that the content of thermal runaway gas in the circulation pipeline 122 has dropped to a safe low value, the controller 124 determines that the energy storage unit 20 has switched from the thermal runaway state to the normal operating state. A gas circulation direction in the gas circulation loop may be from the second pipeline 1222 to the sealed compartment 11, then from the sealed compartment 11 to the first pipeline 1221, and then through the first valve 121 to the second pipeline 1222, forming a loop.

In the above solution, a connection between the first pipeline 1221 and the second pipeline 1222 is disconnected when the energy storage unit 20 is in a thermal runaway state, preventing the flame-retardant gas in the gas circulation loop from entering the sealed compartment 11 through the second pipeline 1222.

According to some embodiments, the sealed compartment 11 is provided in plurality. One end of each sealed compartment 11 is connected to the first pipeline 1221, and another end of each sealed compartment 11 is connected to the second pipeline 1222.

"A plurality" may mean two or more. The sealed compartments 11 may be arranged in a single layer or stacked. Each sealed compartment 11 is connected to both one end of the first pipeline 1221 and one end of the second pipeline 1222. In some application scenarios, one end of the first pipeline 1221 and one end of the second pipeline 1222 may be provided with a diverter valve (not shown in the figures), where the diverter valve includes a manifold and a plurality of branches, each branch being connected to each sealed compartment 11.

In the above solution, a plurality of sealed compartments 11 are provided, with each sealed compartment 11 located in the gas circulation loop, facilitating management of the plurality of sealed compartments 11.

According to some embodiments, the sealed compartments 11 are arranged in a single layer or at least some of the sealed compartments 11 are stacked.

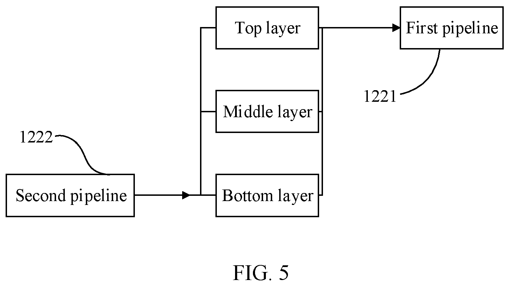

As shown in FIG. 4 and FIG. 5, in FIG. 4, the sealed compartments 11 are arranged in a single layer, while in FIG. 5, the sealed compartments 11 are stacked in three layers, that is, at a bottom layer, a middle layer, and a top layer. In other embodiments, the sealed compartments 11 may be stacked in other numbers of layers, and the number of stacked layers is not specifically limited herein. The number of sealed compartments 11 in each layer may be the same or different. The arrangement of the sealed compartments 11 in FIG. 4 may be considered as a container-type or prefabricated cabin-type arrangement, while the arrangement of the sealed compartments 11 in FIG. 5 may be considered as a valve tower-type arrangement. For example, in the valve hall, the framework for accommodating the sealed compartments 11 (for example, electrical cabinets) is arranged in multiple layers, with at least one sealed compartment 11 placed in each layer of the framework, thereby implementing the stacked arrangement of the sealed compartments 11. For the method of connecting each layer of sealed compartments 11 to the first pipeline 1221 and the second pipeline 1222 in FIG. 5, reference may be made to the connection method shown in FIG. 4. A prefabricated cabin is a high-quality, highly reliable, and highly adaptable customized electrical equipment integration product developed based on mature outdoor box-type product manufacturing technology and in accordance with relevant national standards, while a container is merely a temporary integration product for electrical devices. In prefabricated cabin-type and container-type arrangements, the energy storage units are generally arranged in a single layer, while in the valve tower-type arrangement, the energy storage units can be stacked, for example, in three layers, with each layer including a plurality of energy storage units.

According to some embodiments, the gas driving assembly 127 includes a fan 1271. The fan 1271 is disposed in the first pipeline 1221.

The fan 1271 drives the gas in the first pipeline 1221 to move toward the first valve 121. After the gas in the first pipeline 1221 moves toward the first valve 121, it can further move to the second pipeline 1222, to the sealed electrical cabinet 11, and then back to the first pipeline 1221 to form a loop, or it can further move to the exhaust pipeline 123 and be discharged to a designated area.

In the above solution, the fan 1271 is disposed in the first pipeline 1221, to drive the gas to continue flowing along the gas circulation loop after passing through the first valve 121, and/or drive the gas inside the sealed compartment 11 to be discharged to a designated area along the exhaust pipeline 123.

Referring still to FIG. 2, according to some embodiments, the gas driving assembly 127 includes a smoke exhaust fan 1272. The smoke exhaust fan 1272 is located in the exhaust pipeline 123.

Optionally, the smoke exhaust fan 1272 discharges, in response to a preset first control signal, the gas in the exhaust pipeline 123 to a designated area. For example, the smoke exhaust fan 1272 may be disposed at a side of the exhaust pipeline 123 near the designated area. The smoke exhaust fan 1272 may use a suction method to discharge the gas in the exhaust pipeline 123 to the designated area. The first controller signal may be generated by the controller 124.

In the above solution, the smoke exhaust fan 1272 is disposed, improving the efficiency of gas discharge from the exhaust pipeline 123.

According to some embodiments, a combustible medium filtration assembly 126 is disposed in the first pipeline 1221.

The combustible medium filtration assembly 126 can be used to filter combustible media in the thermal runaway gas. For example, the combustible medium filtration assembly 126 may be a smoke filter. The smoke filter can filter most of the combustible media in the thermal runaway gas, preventing the thermal runaway gas from circulating back to other sealed compartments 11 and posing a fire risk to other sealed compartments 11 in case the exhaust pipeline 123 is not promptly connected or the second pipeline 1222 is not promptly disconnected.

In the above solution, the combustible medium filtration assembly 126 is disposed in the first pipeline 1221, to filter combustible media in the pipeline, further preventing combustible media from flowing back into the cavity.

According to some embodiments, the flame-retardant gas supply system 13 includes a flame-retardant gas supply source 132 and a third valve 131, where the third valve 131 connects the gas circulation loop and the flame-retardant gas supply source 132.

The flame-retardant gas supply source 132 is configured to provide flame-retardant gas, and the flame-retardant gas supply source 132 may be an apparatus for storing or producing flame-retardant gas, for example, the flame-retardant gas supply source 132 may be a nitrogen tank. The third valve 131 may be an electrically controlled valve or a pressure difference control valve.

In the above solution, the flame-retardant gas supply source 132 and the third valve 131 are disposed in the flame-retardant gas supply system 13, allowing the third valve 131 to control the flame-retardant gas supply source 132 to supply flame-retardant gas to the gas circulation loop or to stop supplying flame-retardant gas to the gas circulation loop.

According to some embodiments, the flame-retardant gas supply system 13 includes a flame-retardant gas supply source 132 and a third valve 131, where the third valve 131 connects the gas circulation loop and the flame-retardant gas supply source 132, and the third valve 131 controls the flame-retardant gas supply source 132 to supply flame-retardant gas to the gas circulation loop when a pressure in the gas circulation loop is less than or equal to a preset pressure threshold.

The preset pressure threshold can be set according to requirements, for example, the pressure threshold can be set to be greater than or equal to the pressure outside the gas circulation loop to prevent gas outside the gas circulation loop from flowing into the gas circulation loop. The third valve 131 may be a pressure difference control valve or may be a component including a sensor capable of measuring pressure. In some application scenarios, the third valve 131 may be a pressure difference control valve, and the pressure difference control valve may be a pressure relief valve, a safety valve, or a similar valve. The pressure relief valve generally measures pressure physically and controls the connection between the flame-retardant gas supply source 132 and the circulation system 12 or disconnection between the flame-retardant gas supply source 132 and the circulation system 12 based on the pressure difference across two ends.

In the above solution, the third valve 131 and the flame-retardant gas supply source 132 are disposed, so that the third valve 131 can open when the pressure in the gas circulation loop is less than or equal to the preset pressure threshold, allowing the flame-retardant gas supply source 132 to supply flame-retardant gas to the gas circulation loop.

According to some embodiments, the flame-retardant gas supply system 13 includes a flame-retardant gas supply source 132 and a third valve 131, where the third valve 131 connects the gas circulation loop and the flame-retardant gas supply source 132, and the third valve 131 controls the flame-retardant gas supply source 132 to supply flame-retardant gas to the gas circulation loop at preset intervals so that the pressure in the gas circulation loop is greater than the preset pressure threshold.

The flame-retardant gas supply source 132 is configured to provide flame-retardant gas, where the preset interval can be determined based on the sealing performance of the sealed compartment 11 and the circulation pipeline 122. If the sealing performance is good, the preset interval can be slightly extended; if the sealing performance is poor, the preset interval can be slightly shortened, ensuring that the pressure in the gas circulation loop is greater than the preset pressure threshold within the preset interval. In some application scenarios, the circulation system 12 may further include a controller 124, where the controller 124 opens the third valve 131 at preset intervals to allow the flame-retardant gas provided by the flame-retardant gas supply source 132 to be delivered to the gas circulation loop. The preset interval may be determined based on airtightness of the sealed compartment 11. For example, if the pressure in the sealed compartment 11 drops from A to the preset pressure threshold within n hours, the preset interval can be set to n hours. In some other embodiments, the preset interval may be less than n hours. The method for determining the preset interval is not specifically limited herein.

In the above solution, the flame-retardant gas supply source is controlled to supply flame-retardant gas at intervals, facilitating gas replenishment in the gas circulation loop.

According to some embodiments, the flame-retardant gas supply system 13 includes a flame-retardant gas supply source 132 and a third valve 131, where the third valve 131 connects the gas circulation loop and the flame-retardant gas supply source 132, and the third valve 131 controls the flame-retardant gas supply source 132 to supply flame-retardant gas to the gas circulation loop when an oxygen content in the gas circulation loop is greater than or equal to a preset oxygen content.

The flame-retardant gas supply source 132 is configured to provide flame-retardant gas. A preset oxygen content is lower than a preset ignition threshold. For example, a sensor may be disposed in the gas circulation loop to detect the oxygen content. The third valve 131 may be an electrically controlled valve, and the controller 124 determines, upon receiving a detection result from the sensor, whether to open or close the third valve 131.

In the above solution, flame-retardant gas is promptly supplemented to the gas circulation loop when the oxygen content rises, facilitating dilution of oxygen in the gas circulation loop.

According to some embodiments, the preset pressure threshold is higher than an ambient pressure outside the gas circulation loop.

Maintaining a positive pressure relative to the ambient pressure outside the circulation loop means that the pressure in the circulation loop is greater than the ambient pressure outside the circulation loop. That is, by supplying flame-retardant gas to the gas circulation loop, the flame-retardant gas supply system 13 can maintain a positive pressure in the gas circulation loop compared to the ambient pressure outside the circulation loop.

In the above solution, the gas circulation loop maintains a positive pressure relative to the ambient pressure outside the circulation loop, preventing gas outside the gas circulation loop from flowing into the gas circulation loop due to pressure difference, thereby maintaining a low oxygen concentration in the gas circulation loop.

According to some embodiments, an oxygen content inside the sealed compartment 11 is less than or equal to a preset ignition threshold.

For example, the preset ignition threshold may be less than or equal to 10 percent, or the preset ignition threshold may be set even lower to better reduce the probability of ignition events. That is, the flame-retardant gas supply system 13 supplies flame-retardant gas to the gas circulation loop, making the oxygen content inside the sealed compartment 11 less than or equal to the preset ignition threshold.

In the above solution, the oxygen content inside the sealed compartment 11 is set to be less than or equal to the preset ignition threshold, making it difficult for a combustion or explosion event to occur even after a thermal runaway event in the energy storage unit 20.

According to some embodiments, the third valve 131 is a pressure difference control valve.

The pressure difference control valve may be a third valve used to detect the pressure in the gas circulation loop. For example, the pressure difference control valve may be a pressure relief valve, a pressure reducing valve, a safety valve, or a similar valve. This embodiment takes the pressure difference control valve as a pressure reducing valve as an example. The pressure reducing valve generally measures pressure physically, and controls the connection between the flame-retardant gas supply source 132 and the gas circulation loop or disconnection between the flame-retardant gas supply source 132 and the gas circulation loop based on the pressure detected. The flame-retardant gas supply source 132 may be an apparatus for storing or producing flame-retardant gas, for example, the flame-retardant gas supply source 132 may be a nitrogen tank.

In the above solution, a pressure difference control valve is used to physically measure pressure, with no need for sensor detection and signal transmission processes, resulting in a faster response speed.

As shown in FIG. 3, according to some embodiments, the third valve 131 is an electrically controlled valve. The circulation system 12 includes a pressure detection component 129 disposed in the gas circulation loop, where the pressure detection component 129 and the third valve 131 are connected to the controller 124.

The pressure detection component 129 detects a pressure in the gas circulation loop. The controller 124 is connected to both the pressure detection component 129 and the third valve 131. Optionally, the controller 124, in response to the pressure in the gas circulation loop being less than or equal to a preset pressure threshold, opens the third valve 131, where when the third valve 131 is opened, the flame-retardant gas supply source 132 is in communication with the gas circulation loop. The pressure detection component 129 may be a pressure sensor. The pressure detection component 129 may be disposed at any position in the gas circulation loop. For example, the pressure detection component 129 may be disposed inside the sealed compartment 11 or inside the circulation system 12. For example, the pressure detection component 129 is disposed inside the circulation system 12. In some application scenarios, the circulation loop 122 in the circulation system 12 runs through an equipment room a and a valve hall b, and the pressure detection component 129 may be disposed on a side of the circulation loop 122, located in the equipment room a, in the circulation system 12. When the third valve 131 is opened, the flame-retardant gas supply source 132 is in communication with the gas circulation loop to deliver the flame-retardant gas provided by the flame-retardant gas supply source 132 to the gas circulation loop.

In the above solution, the pressure detection component 129 and the controller 124 are disposed, so that the controller 124 can open the third valve 131 when it determines that the pressure in the gas circulation loop is less than or equal to the preset pressure threshold, allowing the flame-retardant gas provided by the flame-retardant gas supply source 132 to be delivered to the gas circulation loop.

According to some embodiments, the flame-retardant gas supply system 13 further includes a gas generator 133 for producing flame-retardant gas. The gas generator 133 is connected to the flame-retardant gas supply source 132.

The gas generator 133 produces flame-retardant gas and delivers the produced flame-retardant gas to the flame-retardant gas supply source 132. If the flame-retardant gas is nitrogen, the gas generator 133 may specifically be a nitrogen generator.

In the above solution, the gas generator 133 is disposed, allowing for timely replenishment to the flame-retardant gas supply source 132 when the amount of flame-retardant gas in the flame-retardant gas supply source 132 decreases.

According to some embodiments, a buffer component 128 for storing flame-retardant gas is disposed in the circulation pipeline 122. The buffer component 128 is connected to the third valve assembly 131.

The buffer component 128 may be a buffer tank. The buffer tank is located in the gas circulation loop, and gas can flow through the buffer tank.

In the above solution, the buffer component 128 is disposed, to temporarily store the flame-retardant gas in the circulation pipeline 122.

According to some embodiments, the firefighting system 10 includes a cooling system 14. The cooling system 14 includes a fire extinguishing agent supply source 141 and a fourth valve 142. The fourth valve 142 connects the sealed compartment 11 and the fire extinguishing agent supply source 141 and is connected to the controller 124.

Optionally, the fourth valve 142 delivers, in response to a second control signal indicating that the energy storage unit is in a thermal runaway state, the fire extinguishing agent in the fire extinguishing agent supply source 141 to the sealed compartment 11, where the fire extinguishing agent is configured to at least cool the sealed compartment 11. The fire extinguishing agent supply source 141 provides the fire extinguishing agent. The fire extinguishing agent supply source 141 may be an apparatus for storing or producing the fire extinguishing agent, for example, the fire extinguishing agent supply source 141 may be a fire extinguishing agent tank. The fourth valve 142 may specifically be a solenoid valve or other valve that can be controlled by an electrical signal, such as a solenoid valve. In some application scenarios, the fourth valve 142 is connected to the sealed compartment 11 through the second pipeline 1222, to deliver the fire extinguishing agent to the second pipeline 1222, and then, under the push of the gas in the second pipeline 1222, deliver the fire extinguishing agent to the sealed compartment 11. For example, the controller 124 may intermittently transmit signals to the fourth valve 142, allowing the fourth valve 142 to intermittently deliver the fire extinguishing agent to the sealed compartment 11. The fire extinguishing agent can cool the sealed compartment 11. In the event of a fire, the cooling system 14 can provide the fire extinguishing agent to the sealed compartment 11 to cool the sealed compartment 11, thereby reducing the probability of heat diffusion. The flame-retardant gas supply system 13 and the cooling system 14 are configured to alternately provide flame-retardant gas and fire extinguishing agent to the sealed compartment 11 when the energy storage unit 20 is in a thermal runaway state, or may be configured to simultaneously provide flame-retardant gas and fire extinguishing agent to the sealed compartment 11. The flame-retardant gas supply system 13 providing flame-retardant gas to the gas circulation loop is equivalent to providing flame-retardant gas to the sealed compartment 11.

In the above solution, the cooling system 14 is disposed, to further cool the sealed compartment 11 in case of a fire in the sealed compartment 11, reducing heat transfer.

According to some embodiments, the flame-retardant gas supply system 13 and the cooling system 14 are configured to alternately provide flame-retardant gas and fire extinguishing agent to the sealed compartment 11 when the energy storage unit 20 is in a thermal runaway state.

Alternately providing flame-retardant gas and fire extinguishing agent to the sealed compartment 11 means that: when the flame-retardant gas supply system 13 provides flame-retardant gas to the sealed compartment 11, the cooling system 14 stops providing fire extinguishing agent to the sealed compartment 11; when the cooling system 14 provides fire extinguishing agent to the sealed compartment 11, the flame-retardant gas supply system 13 stops providing flame-retardant gas to the sealed compartment 11. In some application scenarios, a priority of the cooling system 14 is higher than a priority of the flame-retardant gas supply system 13, meaning that when the flame-retardant gas supply system 13 and the cooling system 14 are triggered simultaneously, the cooling system 14 first provides the fire extinguishing agent to the sealed compartment 11. In some other application scenarios, a priority of the cooling system 14 is lower than a priority of the flame-retardant gas supply system 13, meaning that when the flame-retardant gas supply system 13 and the cooling system 14 are triggered simultaneously, the flame-retardant gas supply system 13 first provides flame-retardant gas to the sealed compartment 11.

In the above solution, alternately providing flame-retardant gas and fire extinguishing agent to the sealed compartment 11 can reduce the amount of fire extinguishing agent used.

According to some embodiments, the circulation loop 122 in the circulation system 12 runs through a relatively independent equipment room a and a valve hall b. The valve hall b is configured to accommodate the sealed compartment 11, and the equipment room a is configured to accommodate target components of the firefighting system 10. The target components include the controller 124 and the gas sensor 123 of the circulation system 12 and/or the flame-retardant gas supply source 132 of the flame-retardant gas supply system.

The flame-retardant gas supply source 132 is configured to provide flame-retardant gas. The gas sensor 123 is configured to detect a content of thermal runaway gas in the gas circulation loop, and the controller 124 determines, based on the content of the thermal runaway gas, whether the energy storage unit 20 is in a normal operating state or a thermal runaway state. All components of the firefighting system 10 except the sealed compartment 11 may be placed in the equipment room a. As shown in FIG. 1 and FIG. 2, the left side is the equipment room a, and the right side is the valve hall b. Only the sealed compartment 11 is placed in the valve hall b, while the sensor, controller 124, flame-retardant gas supply system 13, exhaust system, and cooling system 14 are all disposed in the equipment room a, facilitating maintenance. Since the sensor and controller 124 are disposed in the equipment room a, they can be powered by mains electricity.

In the above solution, all components of the firefighting system 10 except the sealed compartment 11 are placed in the equipment room a, that is, the flame-retardant gas supply system 13 is disposed in the equipment room a, facilitating maintenance of the flame-retardant gas supply system 13.

According to some embodiments, the firefighting system 10 includes an exhaust pipeline 123, where one end of the exhaust pipeline 123 is in communication with the sealed compartment 11, and another end is in communication with an outside of the valve hall b.

For example, the another end of the exhaust pipeline 123 may alternatively be outside both the equipment room a and the valve hall b.

In the above solution, gas is discharged to the outside of the valve hall b, reducing the risk of fire or explosion in the valve hall b.

In some application scenarios, the sealed compartment 11 is an electrical cabinet, and the first valve 121 is a firefighting three-way valve. One end of the first valve 121 is connected to the first pipeline 1221, another end is connected to the second pipeline 1222, and still another end is connected to the exhaust pipeline 123. The energy storage unit 20 inside the electrical cabinet is a battery module, and the interior of the electrical cabinet is purged of oxygen and filled with nitrogen while maintaining a certain pressure, ensuring that an oxygen concentration in the interior remains extremely low.

During normal operation, the firefighting three-way valve is in a circulation mode, and the fan 1271 drives the nitrogen in the circulation pipeline 122 to flow from the buffer component 128, through the electrical cabinet, the gas sensor 125 (which may be a fire detector), the combustible medium filtration assembly 126, the firefighting three-way valve, and back to the buffer component 128. The fire detector is used to monitor the components in the gas to determine whether battery thermal runaway has occurred. The filtration assembly is used to filter possible impurities in the pipeline. The firefighting three-way valve is used to switch the operating mode (circulation or replacement) of the firefighting system 10.

After a thermal runaway occurs inside the electrical cabinet, smoke flows with the nitrogen through the fire detector, thereby triggering the controller 124 to actuate, so as to switch the firefighting three-way valve to replacement mode. The circulation pipeline 122 is in communication with the outside through the exhaust pipeline 123, causing the pressure inside the pipeline and the buffer component 128 to drop, thereby opening the pressure reducing valve. The flame-retardant gas supply source 132 (for example, a gas storage tank) continuously releases nitrogen to replace the thermal runaway gas inside the electrical cabinet, removing all the thermal runaway gas from the interior of the energy storage system 1.

After the firefighting replacement is completed, the gas generator 133 (for example, a nitrogen generator) replenishes nitrogen to the gas storage tank, implementing maintenance-free operation within the maintenance cycle. Additionally, when there is a leak in the gas circulation loop, the nitrogen generator and the gas storage tank can continuously maintain the positive pressure of the pipeline.

Since the fire detector and the controller 124 are placed in the equipment room a, they are not subject to electromagnetic interference from the energy storage system 1, and they can be powered by mains electricity. Additionally, their operation and maintenance are more convenient, with no need to enter the battery compartment/room for maintenance.

According to some embodiments, the functions or modules included in the apparatus provided in the embodiments of the present disclosure can be used to perform the methods described in the above method embodiments. For specific implementation, reference may be made to the description of the above method embodiments, and details are not repeated herein for brevity.

The description of the embodiments above tends to emphasize the differences between the embodiments, and their similarities can be referenced mutually, which are not repeated herein for brevity.

In several embodiments provided in this application, it should be understood that the disclosed methods and apparatuses can be implemented in other ways. For example, the apparatus embodiments described above are merely illustrative, for example, the division of modules or units is only a logical functional division, and in actual implementation, there may be other division methods, for example, units or components may be combined or integrated into another system, or some features may be omitted or not implemented. Additionally, the coupling or direct coupling or communication connection shown or discussed between each other may be through some interfaces, indirect coupling or communication connection of apparatuses or units, and may be in electrical, mechanical, or other forms.

## Claims

1. A firefighting system, **characterized by** comprising:
a sealed compartment, wherein the sealed compartment is configured to accommodate at least one energy storage unit;
a circulation system, comprising a circulation pipeline and a gas driving assembly, wherein two ends of the circulation pipeline are in communication with the sealed compartment to form a gas circulation loop, and the gas driving assembly is disposed in the gas circulation loop; and
a flame-retardant gas supply system connected to the circulation system.

2. The firefighting system according to claim 1, **characterized in that** the firefighting system comprises an exhaust pipeline and a first valve, wherein one end of the exhaust pipeline is in communication with the sealed compartment, and the first valve is disposed in the circulation pipeline and/or the exhaust pipeline.

3. The firefighting system according to claim 2, **characterized in that** the circulation system further comprises a controller and a gas sensor disposed in the circulation pipeline, wherein the controller is connected to the gas sensor and the first valve.

4. The firefighting system according to claim 2, **characterized in that** the first valve is a multi-way valve, wherein two ends of the first valve are connected to the circulation pipeline to form the gas circulation loop, and another end is connected to the exhaust pipeline.

5. The firefighting system according to claim 2 or 3, **characterized in that** the firefighting system comprises a second valve, wherein the first valve is disposed in the circulation pipeline, one end of the second valve is connected to the compartment, and another end of the second valve is connected to the exhaust pipeline.

6. The firefighting system according to claim 4, **characterized in that** the circulation pipeline comprises a first pipeline and a second pipeline disposed at two ends of the first valve, wherein one end of the first pipeline and one end of the second pipeline are connected to the first valve, another end of the first pipeline is connected to the sealed compartment, and another end of the second pipeline is connected to the sealed compartment.

7. The firefighting system according to claim 6, **characterized in that**
the sealed compartment is provided in plurality, wherein one end of each sealed compartment is connected to the first pipeline, and another end of each sealed compartment is connected to the second pipeline.

8. The firefighting system according to claim 7, **characterized in that**
all the sealed compartments are arranged in a single layer or at least some of the sealed compartments are stacked.

9. The firefighting system according to claim 6, **characterized in that** the gas driving assembly comprises a fan, wherein the fan is disposed in the first pipeline.

10. The firefighting system according to any one of claims 6 to 9, **characterized in that** the gas driving assembly comprises a smoke exhaust fan, wherein the smoke exhaust fan is located in the exhaust pipeline.

11. The firefighting system according to any one of claims 1 to 10, **characterized in that**
a combustible medium filtration assembly is disposed in the circulation pipeline.

12. The firefighting system according to any one of claims 1 to 11, **characterized in that** the flame-retardant gas supply system comprises a flame-retardant gas supply source and a third valve, wherein the third valve connects the gas circulation loop and the flame-retardant gas supply source.

13. The firefighting system according to claim 12, **characterized in that** the third valve controls the flame-retardant gas supply source to supply flame-retardant gas to the gas circulation loop when a pressure in the gas circulation loop is less than or equal to a preset pressure threshold; or
the third valve controls the flame-retardant gas supply source to supply flame-retardant gas to the gas circulation loop at preset intervals so that a pressure in the gas circulation loop is greater than a preset pressure threshold; or
the third valve controls the flame-retardant gas supply source to supply flame-retardant gas to the gas circulation loop when an oxygen content in the gas circulation loop is greater than or equal to a preset oxygen content.

14. The firefighting system according to claim 13, **characterized in that** the preset pressure threshold is higher than an ambient pressure outside the gas circulation loop.

15. The firefighting system according to claim 12 or 13, **characterized in that** the third valve is a pressure difference control valve.

16. The firefighting system according to claim 12 or 13, **characterized in that** the third valve is an electrically controlled valve, and the circulation system comprises a pressure detection component disposed in the gas circulation loop, wherein the pressure detection component and the third valve are connected to the controller.

17. The firefighting system according to any one of claims 1 to 16, **characterized in that** an oxygen content inside the sealed compartment is less than or equal to a preset ignition threshold.

18. The firefighting system according to any one of claims 12 to 17, **characterized in that** the flame-retardant gas supply system further comprises a gas generator for producing flame-retardant gas, wherein the gas generator is connected to the flame-retardant gas supply source.

19. The firefighting system according to any one of claims 12 to 14, **characterized in that**
a buffer component for storing flame-retardant gas is disposed in the circulation pipeline, wherein the buffer component is connected to the third valve.

20. The firefighting system according to any one of claims 1 to 19, **characterized in that** the firefighting system comprises a cooling system, wherein the cooling system comprises a fire extinguishing agent supply source and a fourth valve, wherein the fourth valve connects the sealed compartment and the fire extinguishing agent supply source and is connected to the controller.

21. The firefighting system according to any one of claims 1 to 20, **characterized in that**
the circulation loop runs through a relatively independent equipment room and a valve hall, wherein the valve hall accommodates the sealed compartment, and the equipment room accommodates target components of the firefighting system, the target components comprising the controller and the gas sensor of the circulation system and/or the flame-retardant gas supply source of the flame-retardant gas supply system.

22. The firefighting system according to claim 21, **characterized in that** the firefighting system comprises an exhaust pipeline, wherein one end of the exhaust pipeline is in communication with the sealed compartment, and the other end is in communication with an outside of the valve hall.

23. An energy storage system, **characterized by** comprising the firefighting system according to any one of claims 1 to 22 and at least one energy storage unit.
